# EUROPEAN PATENT SPECIFICATION

(11) **EP 0 905 029 B1**
(45) Date of publication and mention of the grant of the patent: **12.06.2002**
(21) Application number: 98122484.3
(22) Date of filing: 26.02.1997
(51) Int. Cl.: B65C 11/00, G11B 23/40, G09F 3/10

(54) **Label**
Etikett
Etiquette

(30) Priority: 26.02.1996 GB 9604048
(43) Date of publication of application: 31.03.1999
(62) Divisional of application: 97908454.8
(73) Proprietor: Rocky Mountain Traders, Ltd., London WC1B 3QE (GB)
(72) Inventor: Grossman, Stanley I., London, NW3 2AS (GB)
(74) Representative: Caldwell, Judith Margaret

(56) References cited:
- EP-A- 0 203 752
- WO-A-96/05057
- GB-A- 2 212 133
- US-A- 5 340 427

## Description

This invention relates to a label for use on a compact disc.

Electro-optical storage devices presently include Compact Disc Read Only Memory devices (CD ROMs) which are stored digital information, the information being either or both audio and visual in nature. CD ROMs comprise a plastic or "glass" disc which is etched or cut such that when placed in a CD ROM reader and spun at high speed the etched pattern may be identified by a laser or other scanning method.

By their form, function and manufacture, CD ROMs are generally indistinguishable from one another. It is also generally difficult if not impossible to identify the nature or content of the information on a given CD ROM by visual inspection alone. It is therefore necessary to provide CD ROMs with a physical, unique mark or label.

The capability of a CD ROM faithfully to represent the information contained thereon is in large part dependent on the ability of the disc to be placed into a sustained, steady high speed spin about its physical centre. This high speed spin presents complications to the marking methods employed.

Traditional ink based marking methods wherein the ink is applied directly to the disc must use an ink that will remain in place during sustained high speed spin. Additionally, the ink must be non-deleterious to the material of the disc. Use of conventional writing instruments, such as felt tip pens, is generally unsatisfactory since the ink may particulate and become dissociated from the disc with the potential for becoming lodged in the mechanism of the disc reader. In addition, marking in this way does not present a professional appearance if the CD ROMs are to be sold or used commercially

Printers specially adapted for printing onto compact discs are available. However, the cost of such printers, currently ranging between £3K and £10K, is prohibitive to those who are producing CD ROMs in low volumes only.

An alternative to using an ink marker directly on the disc is to use a label, usually a self-adhesive label, which is subsequently attached to the disc. While in theory this seems a simple task, because of the high speed at which the disc must be spun, it is essential that the label be affixed in such a way that the overall balance of the disc is not adversely affected. In particular, it is necessary that the centre of balance of the disc remains about its geometric centre. Labels which are not concentrically affixed to the discs, for example, "half-moon" or semicircular labels, have previously caused malfunctions and often rendered the discs virtually useless.

A device for concentrically applying a label to a compact disc is described and claimed in parent European patent application no. 97908454.8 and a method for applying such a label is described and claimed in divisional European patent application no. 98120229.4; the contents of both of which are incorporated herein by reference.

Labels for use on compact discs have heretofore been such that any matter in the form of information present already on the disc is obscured. This is disadvantageous in situations where it is desired to add information but at the same time retain the information already provided. Until now, it has been necessary to reproduce the original information together with the additional information on the label to be affixed which is not only time consuming but also incurs a risk of introducing errors into the original material.

The present invention therefore resides in a transparent compact disc label capable of allowing visual inspection of the disc surface underneath the label.

Not all transparent materials are suitable for application to compact discs and extensive research has been undertaken to find a workable combination of a transparent label material and an adhesive, the adhesive being compatible with both the disc and the label. Many tested combinations have failed, with the main problems encountered being bubbling and creasing of the label when applied to the disc. It is also important for any such label to be printable by laser printer.

Advantageously, the transparent compact disc label according to the invention comprises a transparent, flexible polymeric material having a coating of an acrylic-based adhesive on at least one surface. The polymeric material may be a polyester or the like.

## Claims

1. A compact disc label adapted to permit visual inspection of a disc to which the label is applied, wherein the label is transparent.

2. A label according to claim 1 comprising a flexible polymeric material.

3. A label according to claim 2, wherein the polymeric material comprises a polyester or the like.

4. A label according to claim 2, wherein at least one surface thereof is provided with a coating of an acrylic based adhesive.

## Patentansprüche

1. Ein Etikett für eine Compactdisc, welches eine visuelle Betrachtung einer Scheibe ermöglicht, an welcher das Etikett angebracht ist, wobei letzteres transparent ist.

2. Etikett nach Anspruch 1, welches ein flexibles Polymermaterial aufweist.

3. Etikett nach Anspruch 2, bei welchem das Polymermaterial ein Polyester oder dgl. umfasst.

4. Etikett nach Anspruch 2, bei welchem wenigstens eine Oberfläche desselben mit einer Beschichtung aus einem Kleber auf Acrylbasis versehen ist.

## Revendications

1. Étiquette pour disque compact adaptée à permettre un examen visuel du disque sur lequel elle est appliquée, dans laquelle, l'étiquette est transparente.

2. Étiquette selon la revendication 1 comprenant une matière polymère souple.

3. Étiquette selon la revendication 2, dans laquelle la matière polymère comprend un polyester ou une matière analogue.

4. Étiquette selon la revendication 2, dans laquelle au moins une surface de l'étiquette porte un enduit d'adhésif à base d'acrylique.
